(19) **Europäisches Patentamt**
**European Patent Office**
**Office européen des brevets**

(11) **EP 3 009 789 A1**

(12) **EUROPEAN PATENT APPLICATION**
published in accordance with Art. 153(4) EPC

(43) Date of publication:
**20.04.2016 Bulletin 2016/16**

(21) Application number: **14810726.1**

(22) Date of filing: **06.06.2014**

(51) Int Cl.:
**G01B 11/00** (2006.01)     **G01C 3/06** (2006.01)

(86) International application number:
**PCT/JP2014/065152**

(87) International publication number:
**WO 2014/199929 (18.12.2014 Gazette 2014/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.06.2013 JP 2013122896**

(71) Applicant: **Yamaha Hatsudoki Kabushiki Kaisha Iwata-shi, Shizuoka 438-8501 (JP)**

(72) Inventor: **KURANUKI Yoshiki**
**Iwata-shi**
**Shizuoka 438-8501 (JP)**

(74) Representative: **Grünecker Patent- und Rechtsanwälte**
**PartG mbB**
**Leopoldstraße 4**
**80802 München (DE)**

(54) **MONOCULAR-MOTION-STEREO DISTANCE ESTIMATION METHOD, AND MONOCULAR-MOTION-STEREO DISTANCE ESTIMATION APPARATUS**

(57)     Provided are a distance estimating method and a distance estimating device with monocular motion stereo that allow simple estimation of a distance to an object in captured images. The distance estimating device mounted on a vehicle includes a camera capturing images, an image storage storing the captured images, an optical flow calculating unit calculating an optical flow from an image center based on the images, a speed sensor measuring a vehicle speed, and a distance estimator estimating a distance to the object appearing in the images in accordance with the optical flow from the image center and the vehicle speed.

FIG.7

## Description

Technical field

The present invention relates to a distance estimating method with monocular motion stereo and a distance estimating device with monocular motion stereo for estimating a distance based on a plurality of images captured with a monocular camera.

Background Art

Systems for recognizing vehicle surroundings three-dimensionally have been developed formerly to yield an anti-collision device for drive assist and active safety of a four-wheeled motor vehicle. Examples of a method for detecting the vehicle surroundings include one using an active sensor such as a millimeter wave radar and a laser radar, and one using a passive sensor such as a stereo camera and a monocular camera. The active sensor obtains distance accuracy and stable output regardless of an environment of a light source. On the other hand, the active sensor has a low space resolution relative to its expensiveness.

In contrast to this, the passive sensor is often superior in point of its space resolution and price. When a camera, a typical sensor, is used, a stereo camera is generally adopted that uses two or more camera for a three-dimensional reconstruction method. However, the stereo camera requires a plurality of cameras (e.g., lenses and image sensors). In addition, the cameras have to be fixed with a sturdy casing. This is likely to cause an expensive sensor. Moreover, a long distance between the adjacent cameras is required for securing distance accuracy. This leads to an increase in size of an imaging part itself. Such drawbacks exist.

On the other hand, various types of stereo methods with a monocular camera have been studied. A single camera allows the three-dimensional reconstruction when the camera captures images successively while moving to recognize relative positions of the camera. Such a method is often referred to as monocular stereo, motion stereo, or structure from motion (SfM) in general. Here in the present invention, a designation of monocular motion stereo is adopted. The monocular motion stereo is achieved by estimating relative positional information of the camera having moved as time elapses with a certain method. See Patent Literature 1: Japanese Patent No. 4943034B.

(1) Technique of Patent Literature 1

Patent Literature 1 discloses a monocular motion stereo device. The monocular motion stereo device extracts feature points of successive images, and selects a corresponding point with a high degree of reliability from the extracted feature points by an epipolar error. In addition, the monocular motion stereo device calculates a basic matrix (i.e., a matrix representing relative positions of the camera) with high accuracy.

[Patent Literature]

Patent Literature 1 Japanese Patent No. 4943034B

Summary of Invention

Technical Problem

However, the technique in Patent Literature 1 requires extremely long time to extract and select the feature points, and calculate the basic matrix repeatedly. Accordingly, a low specification CPU for automobiles cannot process in short time. Such a drawback may arise.

The present invention has been made regarding the state of the art noted above, and its one of objects is to provide a distance estimating method with monocular motion stereo and a distance estimating device with monocular motion stereo using the method for simple estimation of a distance to an object in a captured image.

Solution to Problem

The present invention is constituted as stated below to achieve the above object. A first aspect of the present invention provides a method of estimating a distance from a moving object with monocular motion stereo. The method includes a capturing step of capturing images, an optical flow calculating step of calculating an optical flow from an image center based on the images captured sequentially, a speed measuring step of measuring a speed of the moving object, and a distance estimating step of estimating a distance to an object appearing in the images in accordance with the optical flow from the image center and the speed.

With the first aspect of the present invention, a region in front of the moving object is captured in the capturing step. In the optical flow calculating step, the optical flow from the image center is calculated based on the images captured sequentially. In addition, in the speed measuring step, the speed of the moving object is detected. In the distance estimating step, the distance to the object appearing in the image is estimated in accordance with the optical flow from the image center and the speed of the moving object.

Calculating the optical flow from the image center based on the images captured sequentially yields limitation in direction of the optical flow only outward from the image center. This allows elimination of calculating the optical flows in vertical and horizontal directions from every pixel over the images. Accordingly, computing load for distance estimation significantly decreases. As a result, this allows simple estimation of the distance to the object appearing in the captured images.

Moreover, it is preferred that the optical flow calculating step includes an image scale-up step of scaling up one of the images captured in a previous frame, and a matching step of matching the scale-up image to another one of the images in a current frame, and the optical flow is calculated in accordance with an image scale factor of a matched scale-up image.

In the image scale-up step, the image captured in the previous frame is scaled up. Then, in the matching step, the scaled-up image is matched to the image in the current frame, and selects a scaled-up image matched most closely to that in the current frame. Then, the optical flow is calculated in accordance with the image scale factor of the selected scale-up image. This allows significant reduction in computing load upon estimating the distance.

Moreover, it is preferred that the method further includes a capturing-unit moving-amount estimating step of estimating a moving amount of a capturing unit capturing the images, and an image correcting step of correcting each of the images in accordance with the moving amount of the capturing unit so as for a vanishing point to be located in the image center. It is also preferred that the optical flow calculating step includes calculating the optical flow from the image center based on the captured images and a corrected image.

In the capturing-unit moving-amount estimating step, the moving amount of the capturing unit capturing the images is estimated. Accordingly, the moving amount of the camera moving in accordance with track conditions can be estimated. In the image correcting step, the image is corrected in accordance with the estimated moving amount of the capturing unit so as for the vanishing point to be located in the image center. As a result, the vanishing point is located at the image center even when the vanishing point is shifted from the image center depending on the track conditions. This yields calculation of the optical flow from the image center in the optical flow calculation step based on the captured images and the corrected image, achieving reduction in computing load for estimating the distance regardless of the track conditions.

It is also preferred that the method further includes a specific-region optical-flow calculating step of calculating an optical flow from a specific region based on the captured images, and the capturing-unit moving-amount estimating step includes estimating the moving amount of the capturing unit in accordance with the optical flow from the specific region.

In the specific-region optical-flow calculating step, the optical flow from the specific region based on the captured images is calculated. In addition, in the capturing-unit moving-amount estimating step, the moving amount of the capturing unit is estimated from the optical flow from the specific region. The moving amount of the capturing unit can be estimated from only the captured images. This avoids high costs and thus yields ready application to an existing moving object.

A second aspect of the present invention provides a distance estimating device with monocular motion stereo that is mounted on a moving object. The device includes a capturing unit capturing images, an image storage storing the captured images, an optical flow calculating unit calculating an optical flow from an image center based on the images, a speed sensor measuring a speed of the moving object, and a distance estimator estimating a distance to an object appearing in the images in accordance with the optical flow from the image center and the speed.

With the second aspect of the present invention, the capturing unit captures a region in front of the capturing unit. The image storage stores the captured image sequentially. The optical flow calculating unit calculates the optical flow from the image center based on the images captured sequentially. The speed sensor measures the speed of the moving object. The distance estimator estimates the distance to the object appearing in the images in accordance with the optical flow from the image center and the measured speed of the moving object.

Calculating the optical flow from the image center based on the images captured sequentially yields limitation in direction of the optical flow only outward from the image center. This allows elimination of calculating the optical flows in vertical and horizontal directions from every pixel over the images. Accordingly, computing load for distance estimation significantly decreases. As a result, this allows simple estimation of the distance to the object appearing in the captured images.

It is also preferred that the optical flow calculating unit includes an image scale-up unit scaling up one of the images captured in a previous frame, and a matching unit matching the scale-up image to another one of the images in a current frame, and the optical flow is calculated in accordance with an image scale factor of a matched scale-up image.

The image scale-up unit scales up the image captured in the previous frame. The matching unit matches the scale-up image to the image in the current frame, and selects a scaled-up image matched most closely to that in the current frame. Then, the optical flow is calculated in accordance with the image scale factor of the selected scale-up image. This allows significant reduction in computing load upon estimating the distance.

It is also preferred that the device further includes a capturing-unit moving-amount estimator estimating a moving amount of the capturing unit, and an image corrector correcting each of the images in accordance with the moving amount of the capturing unit so as for a vanishing point to be located at the image center. It is also preferred that the optical flow calculating unit calculates the optical flow from the image center based on the captured images and a corrected image.

The capturing-unit moving-amount estimator estimates the moving amount of the capturing unit capturing the images. Accordingly, the moving amount of the camera moving depending on the track conditions can be estimated. The image corrector corrects the image in accordance with the estimated moving amount of the capturing unit so as for the vanishing point to be located in the image center. As a result, the image is corrected so as for the vanishing point to be located at the image center even when the vanishing point is shifted from the image center depending on the track conditions. This yields calculation of the optical flow from the image center based on the captured images and the corrected image. Accordingly, calculation of the optical flows in vertical and horizontal directions from every pixel over the images can be eliminated, leading to significant reduction in computing load for estimating the distance. In addition, the reduction in computing load for estimating the distance is obtainable regardless of the track conditions.

It is also preferred that the device further includes a specific-region optical-flow calculating unit calculating an optical flow from a specific region based on the captured images, and that the capturing-unit moving-amount estimator estimates the moving amount of the capturing unit in accordance with the optical flow from the specific region.

The specific-region optical-flow calculating unit calculates the optical flow from the specific region based on the captured images. The capturing-unit moving-amount estimator estimates the moving amount of the capturing unit in accordance with the optical flow from the specific region. The moving amount of the capturing unit can be estimated from only the captured images. This avoids high costs and thus yields ready application to an existing moving object.

It is also preferred that the device further includes a specific-region optical-flow calculating unit calculating the optical flow from the specific region based on the captured images, and a sensor detecting movement of the moving object or the capturing unit. It is also preferred that the capturing-unit moving-amount estimator estimates the moving amount in accordance with a detection value of the sensor and the optical flow from the specific region.

The specific-region optical-flow calculating unit calculates the optical flow from the specific region based on the captured images. Beside this, the sensor is provided for detecting the movement of the moving object or the capturing unit. Accordingly, the sensor can directly detect the movement of the moving object or the capturing unit. The capturing-unit moving-amount estimator estimates the moving amount in accordance with the detection value of the sensor and the optical flow from the specific region. This results in accurate estimation of the moving amount of the capturing unit, yielding enhanced accuracy in estimating the distance to the object appearing in the captured images.

It is also preferred that the device includes a sensor detecting movement of the moving object or the capturing unit, and the capturing-unit moving-amount estimator estimates the moving amount of the capturing unit in accordance with a detection value of the sensor. Such a configuration with the sensor that detects the movement of the moving object or the capturing unit allows direct detection of the movement of the moving object or the capturing unit with the sensor. The capturing-unit moving-amount estimator estimates the moving amount of the capturing unit in accordance with the detection value with the sensor. This allows reduction in computing load for image processing, leading to more rapid estimation of the distance.

It is also preferred that the specific region is the image center. The specific region as the image center allows ready calculation of the optical flow from the specific region.

It is also preferred that the specific region is a midpoint on a lower end of each of the images. The specific region as the midpoint of the lower end of each of the images allows ready calculation of the optical flow from the specific region.

It is also preferred that the sensor is a gyro sensor or an acceleration sensor. Using the gyro sensor or the acceleration sensor yields appropriate detection of the movement of the moving object or the capturing unit.

Moreover, the sensor is a steering angle sensor detecting a steering angle of the moving object. The capturing-unit moving-amount estimator estimates the moving amount of the capturing unit in accordance with the steering angle detected with the steering angle sensor, the speed detected with the speed sensor, and the optical flow from the specific region. Such is adoptable. When the steering angle sensor is used for the moving object, no additional sensor is required. This avoids high costs, and thus yields ready estimation of the moving amount of the capturing unit.

Advantageous Effects of Invention

The aspects of the present invention can provide a distance estimating method with monocular motion stereo and a distance estimating device with monocular motion stereo with the method for simple estimation of a distance to an object appearing in captured images.

Brief Description of Drawings

Figure 1 illustrates an image in a current frame according to one embodiment of the present invention.
Figure 2 illustrates an image in a previous frame according to the embodiment.
Figure 3 illustrates a relationship between a monocular camera and axes.
Figure 4 illustrates a relationship between the camera and an imaging plane.
Figure 5 illustrates optical flows from an image center.
Figure 6 is a side view of a vehicle according to the embodiment.
Figure 7 is a block diagram of a distance estimating device according to Embodiment 1 of the present invention.
Figure 8 illustrates calculation of the optical flows from the image center according to Embodiment 1.
Figure 9 is a flow chart of distance estimation according to Embodiment 1.
Figure 10 is a block diagram of a distance estimating device according to Embodiment 2 of the present invention.
Figure 11 is a flow chart of distance estimation according to Embodiment 2.
Figure 12 illustrates a specific region according to Embodiment 3 of the present invention.
Figure 13 is a block diagram of a distance estimating device according to Embodiment 4 of the present invention.
Figure 14 is a flow chart of distance estimation according to Embodiment 4.
Figure 15 is a block diagram of a distance estimating device according to one modification of the present invention.

Embodiment 1

1. Theoretical Explanation of Embodiment 1

The following firstly describes one embodiment of the present invention theoretically.

1.1 Optical Flow

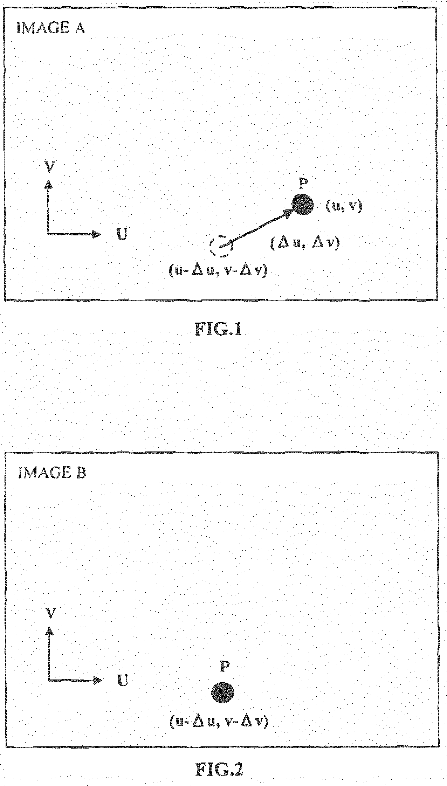

An optical flow is to be described with reference to Figures 1 and 2. Figure 1 illustrates an image in a current frame. Figure 2 illustrates an image in a previous frame. Here, an optical flow corresponds to a vector representing a moving amount of a point between images temporally adjacent to each other. For instance, an optical flow is determined from an image A (see Figure 1) in the current frame and an image B (see Figure 2) in the previous frame captured prior to the image A by firstly searching a point in the image B from which a point in the image A has been shifted. Here, the images each have a V-axis upward thereof, and a U-axis rightward thereof. In addition, the images each have the center for an origin point of the U-axis and the V-axis.
It is assumed that a point P has been shifted from a position in the image B to a position in the image A, as illustrated in Figure 1. The position of the point P in the image B has a coordinate $(u-\Delta u, v-\Delta v)$, whereas the position of the point P in the image A has a coordinate $(u, v)$. Accordingly, a vector $(\Delta u, \Delta v)$, a difference in position between the point P in the image A and the point P in the image B, corresponds to an optical flow at the point $(u, v)$ in the image A. In other words, the point $(u, v)$ in the image A is an end point of the optical flow. The point $(u-\Delta u, v-\Delta v)$ in the image A, corresponding to the point $(u-\Delta u, v-\Delta v)$ in the image B, is a start point of the optical flow.

1.2. Monocular Motion Stereo

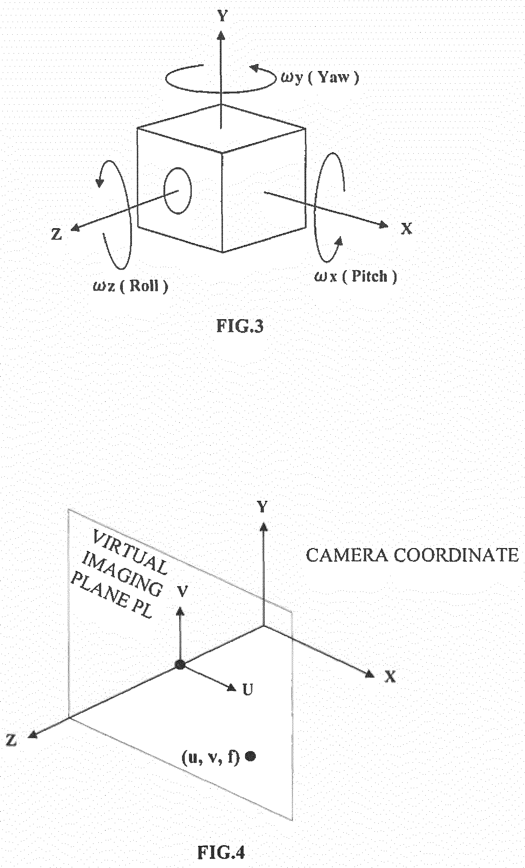

The following describes monocular motion stereo. The monocular motion stereo corresponds to estimation of a moving amount of a camera (hereinafter, referred to as a camera motion parameter) in accordance with the optical flow between the images A and B and estimation of a distance to an object appearing in the images. Consequently, the monocular motion stereo requires a relationship among the optical flow between the images A and B, the camera motion parameter, and the distance to the object. Here, the camera motion parameter corresponds to the capturing-unit moving amount in the present invention.
Supposed the object captured by the camera remains at rest. A typical pin-hole camera as in Figure 3 adopts a model with a camera and an imaging plane in Figure 4, for example. It is assumed that an X-axis and a Y-axis of a camera coordinate are parallel to the U-axis and the V-axis in the captured image, respectively, and that the center of the captured image corresponds to a position of a camera coordinate $(0, 0, f)$. See Figure 4. Here, a focus distance of the camera is denoted by a numeral f. Moreover, a virtual imaging plane PL is a virtual plane on which the captured image is assumed to be located in a camera coordinate system.

Figure 3 illustrates a camera motion parameter with six degrees of freedom. That is, the parameter consists of three degrees of freedom for rotary moving amount ($\omega x$, $\omega y$, $\omega z$) and three degrees of freedom for translation moving amount (tx, ty, tz). The rotary moving amount is an angular variation in unit time. The translation moving amount is a distance variation in unit time. The following relationship is known among the camera motion parameter ($\omega x$, $\omega y$, $\omega z$), (tx, ty, tz), and a distance z to the object captured with the camera, a point (u, v) in the image, and an optical flow ($\Delta u$, $\Delta v$) at the point.

Formula 1

$$\Delta u = -\omega_y f - \frac{t_x f}{z} + \frac{t_z}{z} u + \omega_z v + \frac{\omega_x}{f} uv - \frac{\omega_y}{f} u^2 \quad ...(1)$$

Formula 2

$$\Delta v = +\omega_x f - \frac{t_y f}{z} + \frac{t_z}{z} v - \omega_z u - \frac{\omega_y}{f} uv + \frac{\omega_x}{f} v^2 \quad ...(2)$$

The camera motion parameter is estimated from the optical flow using the above formulae (1) and (2). The camera motion parameter can be simplified when a vehicle moves linearly. The camera motion parameter for the vehicle moving linearly is expressed by the following formula since the camera is monocular:

Formula 3

$$(\omega x, \omega y, \omega z) = (0, 0, 0) \dots (3)$$

Formula 4

$$(tx, ty, tz) = (0, 0, tz) \dots (4)$$

Substitution of the formulae (3) and (4) to the formulae (1) and (2) obtains the following formulae:

Formula 5

$$\Delta u = \frac{t_z}{z} u \quad ...(5)$$

Formula 6

$$\Delta v = \frac{t_z}{z} v \quad ...(6)$$

Raising both sides of the formulae (5) and (6) to the second power and adding them gives the following formula:

Formula 7

$$(\Delta u)^2 + (\Delta v)^2 = \frac{t_z^2}{z^2} (u^2 + v^2) \quad ...(7)$$

Here, a distance w from the image center is expressed by $w^2 = u^2+v^2$. Accordingly, the formula (7) is represented as follows using the formulae (5) and (6):
Formula 8

$$\Delta w = \frac{t_z}{z} w \quad ...(8)$$

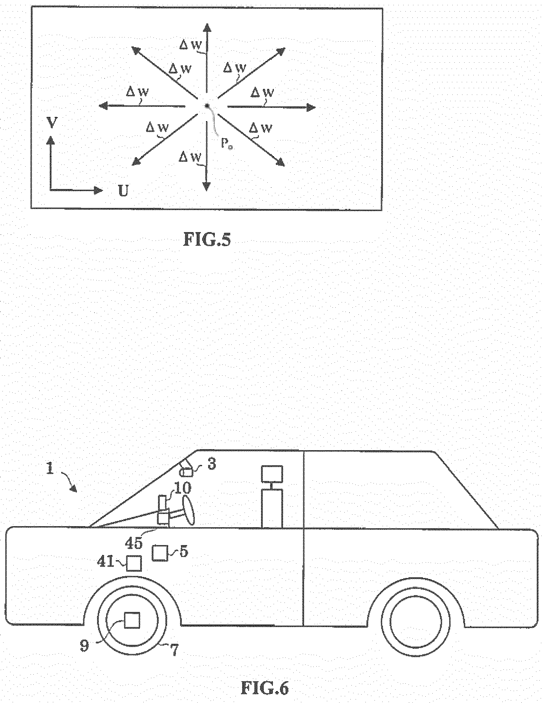

The formula (8) expresses that a distance z can be estimated from an optical flow $\Delta w$ extending radially from the image center (see Figure 5) and a vehicle speed tz. The above calculation yields theoretical explanation of estimating the distance z. Figure 5 illustrates an image also having the start point of the optical flows in the image B indicated on the image A. In other words, Figure 5 illustrates a vector set of the optical flows. A point at which the optical flows $\Delta w$ converge toward the start point corresponds to a vanishing point. That is, the vanishing point is a point at which lines that the optical flows $\Delta w$ extend toward the start point cross one another. In Figure 5, the vanishing point $P_o$ conforms to the image center.

2. Vehicle of Embodiment 1

Embodiment 1 implementing the above theory is to be described with reference to drawings. Figure 6 is a side view of a vehicle 1 according to Embodiment 1. Embodiment 1 describes a four-wheeled vehicle 1 as one example of the moving object in the present invention. The vehicle 1 is not limited to a passenger car. For instance, examples of the vehicle 1 include an unmanned guided vehicle that travels in a factory or an orchard, and a golf cart. The vehicle 1 corresponds to the moving object in the present invention. In addition, the moving object is not limited to the four-wheeled vehicle. Alternatively, the moving object may be a two-wheeled vehicle or a three-wheeled vehicle, and may be of a monorail type.

The vehicle 1 is provided with a monocular camera 3 in the middle of a vehicle width direction. The vehicle 1 further includes a distance estimating device 5 estimating a distance to an object in front of the vehicle 1, a vehicle speed sensor 9 detecting a vehicle speed of the vehicle 1, and a monitor 10 displaying information on the estimated distance. The vehicle speed sensor 9 is, for example, a wheel speed sensor detecting a vehicle speed from a rotation speed of a wheel 7. Hereinunder, the terms front and rear as well as right and left are relative to a direction where the vehicle 1 travels ahead.

3. Distance Estimating Device in Embodiment 1

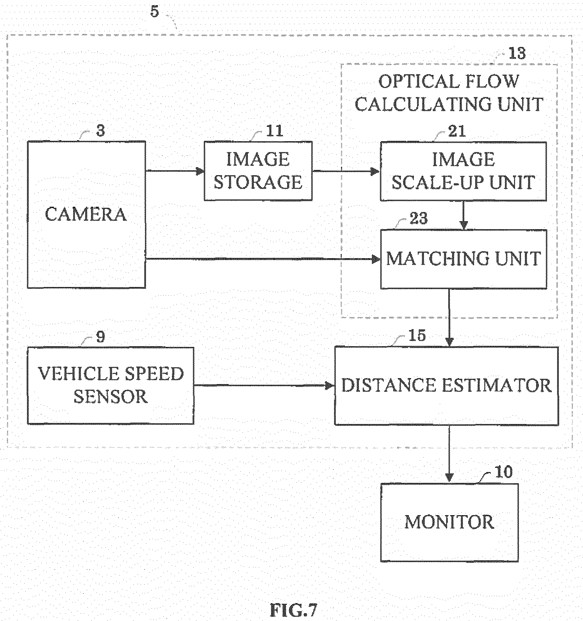

The following describes the distance estimating device 5 of the vehicle 1 with reference to Figure 7. Figure 7 is a block diagram of the distance estimating device.

The distance estimating device 5 includes a camera 3 capturing images in front of the vehicle 1, an image storage 11 storing the images captured by the camera 3 temporarily, an optical flow calculating unit 13 calculating optical flows from an image center, a distance estimator 15 estimating distance information for each pixel in accordance with the optical flows from the image center, and a vehicle speed sensor 9 detecting a vehicle speed of the vehicle 1. The optical flow calculating unit 13 and the distance estimator 15 are each formed by a microprocessor or an FPGA (Field Programmable Gate Array). The following describes each of the above components in turn.

The camera 3 is formed by a monocular camera. Moreover, the camera 3 is a common visual sensor such as a CCD or a CMOS. The camera 3 has an optical axis directed to a travelling direction of the vehicle 1. Accordingly, the center of the image captured by the camera 3 is directed to the travelling direction of the vehicle 1. When the optical axis of the camera 3 is not directed to the travelling direction of the vehicle 1, a deviation of the optical axis from the travelling direction of the vehicle is measured in advance to confirm a position of a vanishing point in the image when the vehicle 1 travels linearly on a planar track. Then camera calibration is performed as image correction to shift the image of the camera 3 entirely in parallel such that the vanishing point is located at the image center when the vehicle 1 travels linearly on the planar track. As noted above, when the optical axis of the camera 3 is not directed to the travelling direction of the vehicle 1, a camera calibration unit performing the camera calibration is required prior to implementation of the monocular motion stereo.

The image storage 11 stores the images captured by the camera 3 temporarily along with frames. The stored images are each outputted to an image scale-up unit 21. The image storage 11 is composed of a memory, a flash memory, a hard disk (HDD), and the like.

The optical flow calculating unit 13 calculates the optical flow from the image center based on the image A in the current frame from the camera 3 and the image B in the previous frame from the image storage 11. The optical flow calculating unit 13 includes the image scale-up unit 21 scaling up the image B in the previous frame, and a matching unit 23 matching the scale-up image B to the image A in the current frame. The following describes how the optical flow from the image center is calculated.

With the currently-used optical flow calculation, the optical flows in the vertical and horizontal directions in the image, i.e., the U-and V-directions, have to be determined. On the other hand, limitation of the optical flows from only the image center yields direct calculation of $\Delta w$. That is, $\Delta w$ can be determined without calculating $\Delta u$ and $\Delta v$. This allows significant reduction in computing load.

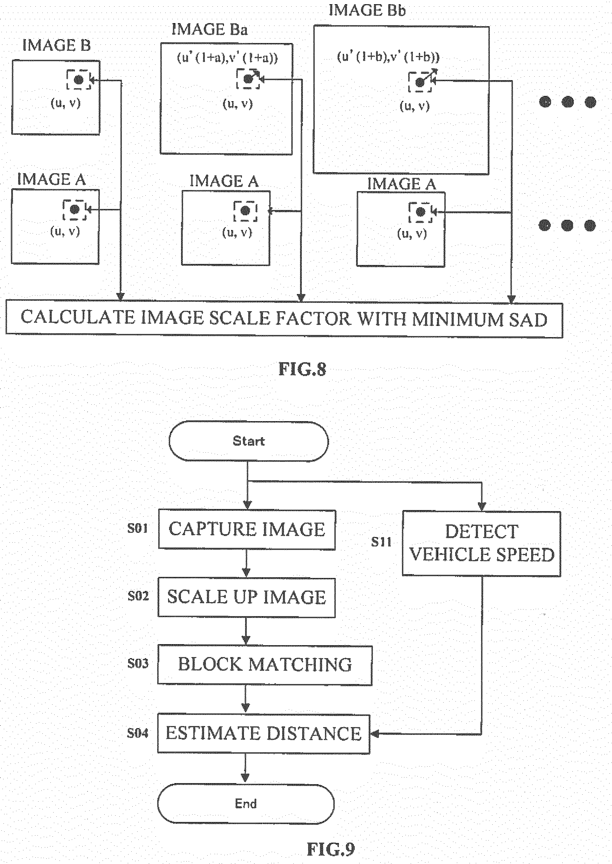

As illustrated in Figure 8, the image scale-up unit 21 scales up the image B in the previous frame by a factor of (1+a), (1+b), ..., and (1+n) in turn. Here, a relationship of a <b <... <n holds. Figure 8 illustrates how to calculate the optical flows from the image center. Values of a, b, ..., and n may increase by 0.1, i.e., the values may be 0.1, 0.2, .... An increased rate of scale factor and the maximum scale factor may be determined depending on the vehicle speed and a frame rate.

The matching unit 23 performs block matching the image B and the scale-up images $B_a$, $B_b$, ..., and $B_n$ to the image A with reference to the image center. Here, the block matching is a method for evaluating similarity between the images with an evaluation function. Examples of the evaluation function include SAD (Sum of Absolute Difference), SSD (Sum of Squares Difference), and image correlation. In Embodiment 1, similarity is evaluated for a matching window size of (2M+1) x (2N+1) with SAD in the following formula.
Formula 9

$$ SAD = \sum_{i=-M}^{M} \sum_{j=-N}^{N} \left| I_A(u+i, v+j) - I_B(u+\Delta u+i, v+\Delta v+j) \right| \quad ...(9) $$

The matching unit 23 determines a scale factor of the image B when a value of SAD from the formula (9) at every pixel in the image A is the minimum using the image B and the scale-up images relative to the image B. For instance, it is assumed that a result is given that a point (u, v) in the image A matches most closely to a point (u, v) in the image $B_a$ of the images image $B_a$, ..., $B_n$ obtained by scaling the image B by (1+a), ..., and (1+n), respectively. Since the point (u, v) is actually shifted to the point (u(1+a), v(1+a)) in the image $B_a$, it is conceivable that the point (u, v) in the image A is shifted to the point (u(1+a), v(1+a)) in the image $B_a$. That is, an optical flow ($\Delta u$, $\Delta v$) equals to (ua, va).

Here, $w^2=u^2+v^2$. Accordingly, $\Delta w=wa$. From the above, the formula (8) leads to the following formula:
Formula 10

$$ z = \frac{t_z}{a} \quad ...(10) $$

The distance estimator 15 estimates the distance z to the object in accordance with the vehicle speed tz and a scale factor (1+a) of the image from the formula (10). Specifically, information on the distance to the object, indicated with the pixels, is obtainable from the scale factor of the each of the pixels in the image.

4. Distance Estimating Method according to Embodiment 1

The following describes estimation of the distance in Embodiment 1 with reference to Figure 9. Figure 9 is a flow chart of procedures for estimating the distance.

The camera 3 on a front face of the vehicle 1 captures images in front of the vehicles 1 (step S01). The camera 3 captures the images successively in time sequence at frame intervals of 1/30 seconds, for example. The captured images are stored in the image storage 11, and are transmitted to the matching unit 23.

In parallel with capture of the image A in the current frame, the image B in the previous frame stored in the image storage 11 is transmitted to the image scale-up unit 21. The image scale-up unit 21 generates images $B_a$, $B_b$, ..., and $B_n$ obtained by scaling up the received image B at a plurality of powers (step S02). The scale-up images $B_a$, $B_b$, ..., $B_n$ as well as the image B are transmitted to the matching unit 23. The matching unit 23 performs block matching of the image B in the previous frame and the scale-up images $B_a$, $B_b$, ..., $B_n$ to the image A in the current frame on each pixel (step S03). Accordingly, the optical flow from the image center is calculated. The calculated optical flow from the image center is transmitted to the distance estimator 15. Here, the steps S02 and S03 correspond to the optical flow calculating step in the present invention.

In addition, the vehicle speed sensor 9 detects the vehicle speed of the vehicle 1 (step S11) at the same timing of capturing the images in the step S01. The detected vehicle speed is transmitted to the distance estimator 15. The distance estimator 15 estimates the distance z to the object, indicated on the pixel, in accordance with the vehicle speed tz of the vehicle 1 detected by the vehicle speed sensor 9 and the optical flow Δw from the image center received from the matching unit 23 (step S04). The estimated distance information is outputted to a monitor 10. The monitor 10 displays the distance information in different colors for the distances to the object. The estimated distance information may be used not only for display on the monitor 10 but for controlling travelling of the vehicle.

As noted above, with Embodiment 1, when the vehicle 1 travels linearly, the optical flow from the image center can be calculated not by searching the optical flows in the vertical and horizontal directions of the captured image but by matching the image previously captured to the scale-up image. The optical flow from the image center yields ready estimation of the distance to the imaged object, leading to significant reduction in computing load. In addition, the significant reduction in computing load achieves an increased frame rate upon image capturing. This allows estimation of the distance to the object appearing in the image in a short time.

Embodiment 2

The following describes a distance estimating method and a distance estimating device when the vehicle 1 corners and moves upward/downward. Embodiment 2 has a characteristic to estimate a distance even when a vanishing point is not located at the image center due to travelling of the vehicle depending on track conditions. In Embodiment 1, the camera motion parameter varies only in the tz-direction. In contrast to this, in Embodiment 2, the distance can be estimated even when the parameter varies in a yaw direction and a pitch direction. This allows estimation of the distance regardless of the track conditions.

5. Theoretical Explanation of Embodiment 2

The vehicle 1 travels upward and downward along an undulate road in the pitch direction, and the camera 3 turns at ωx rotation in the pitch direction. Moreover, the vehicle 1 corners, and then the camera 3 turns at ωy rotation in the yaw direction. In such a case, the camera 3 has a motion parameter as in the following formula as transformation of the formula (3):

$$(\omega x, \omega y, \omega z) = (\omega x, \omega y, 0) \ldots (3)'$$

The formulae (1) and (2) are each transformed as under with the formulae (3)' and (4):
Formula 11

$$\Delta u = -\omega_y f + \frac{t_z}{z} u + \frac{\omega_x}{f} uv - \frac{\omega_y}{f} u^2 \quad \ldots (11)$$

Formula 12

$$\Delta v = +\omega_x f + \frac{t_z}{z} v - \frac{\omega_y}{f} uv + \frac{\omega_x}{f} v^2 \quad \ldots (12)$$

The optical flows in the entire image are calculated, and simultaneous equations (11) and (12) are solved, whereby camera motion parameters ωx and ωy are determined. However, the method requires determination of the optical flows in the entire image. This causes significantly increased computing load. Then, calculation of an optical flow from a specific region, mentioned below, yields reduction in computing load and influence by a motion object appearing in the image.

Embodiment 2 describes a case in which the image center is set as the specific region. The image center has a coordinate of (u, v)=(0, 0). Accordingly, the formulae (11) and (12) each hold as under:
Formula 13

$$\Delta u_0 = -\omega_y f \quad ...(13)$$

Formula 14

$$\Delta v_0 = +\omega_x f \quad ...(14)$$

Note that ($\Delta u_0$, $\Delta v_0$) denotes an optical flow at the image center. Consequently, a pitch component $\omega x$ and a yaw component $\omega y$ of the camera motion parameter can be estimated directly from the optical flow at the center. The optical flow at the center is calculated using block matching, which is similar to that in Embodiment 1. The SAD in the formula (9) is used for an evaluation function in the block matching with 0.1-pixel resolution.

In the formula (9), $I_A$ denotes the image A, and $I_B$ denotes the image B. Accordingly, the SAD is minimized at ($\Delta u$, $\Delta v$) which is the optical flow at the point (u, v). In Embodiment 2, components of ($\Delta u$, $\Delta v$) each have a sub-pixel value of the tenth place. Then, an intensity value is referred from the sub-pixel value in the image B using an interpolate method such as a bilinear form. As noted above, the optical flow from the specific region as the center is calculated, whereby the camera motion parameter can be estimated.

On the other hand, although the camera motion parameters $\omega x$ and $\omega y$ are estimated, the optical flow at the image center cannot be calculated in the same manner as that when the camera motion parameter is only for linear movement in the tz direction. That is because no vanishing point is located at the image center when the pitch component $\omega x$ and the yaw component $\omega y$ of the camera motion parameter are present. Then, image correction is performed so as for the vanishing point to be located at the image center. Transformation of the formulae (11) and (12) give the following formulae, respectively: Formula 15

$$u - \left((u - \Delta u) - \left(\omega_y f - \frac{\omega_x}{f}uv + \frac{\omega_y}{f}u^2\right)\right) = \frac{t_z}{z}u \quad ...(15)$$

Formula 16

$$v - \left((v - \Delta v) - \left(-\omega_x f + \frac{\omega_y}{f}uv - \frac{\omega_x}{f}v^2\right)\right) = \frac{t_z}{z}v \quad ...(16)$$

The optical flow from the image center can be calculated from the formulae (15) and (16) in the same manner as the linear camera motion parameter by correcting the image B in the previous frame with the estimated camera motion parameters $\omega x$ and $\omega y$. A given optical flow ($\Delta u$, $\Delta v$) is determined from a point (u-$\Delta u$, v-$\Delta v$) in the image B corresponding to the point (u, v) in the image A. That is, the formula (15) expresses u on the right side as a point in the image A, and u-$\Delta u$ as a point in the image B. Accordingly, the point (u-$\Delta u$, v-$\Delta v$) in the image B is shifted by $\left(+\omega_y f - \frac{\omega_x}{f}uv + \frac{\omega_y}{f}u^2, -\omega_x f + \frac{\omega_y}{f}uv - \frac{\omega_x}{f}v^2\right)$ from the formulae (15) and (16) yields estimation of the distance in the same manner as in Embodiment 1. Here, the image correction is equal to correction of the position of the vanishing point shifted due to rotation of the camera 3 in the pitch and yaw directions toward the image center. The above is theoretical explanation on estimating the distance according to Embodiment 2.

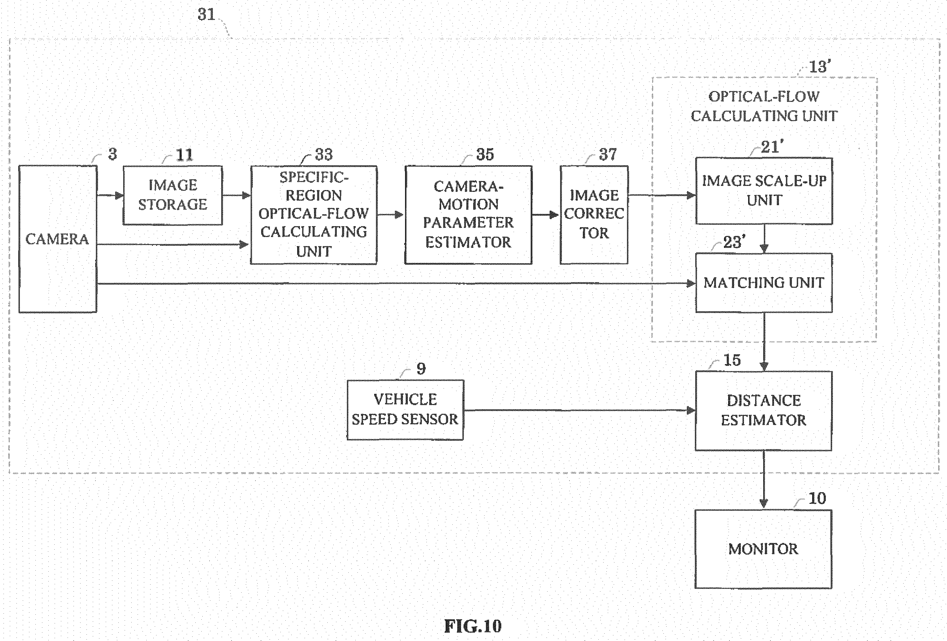

The following describes the distance estimating device for implementing the above theory with reference to Figure 10. Figure 10 is a block diagram of the distance estimating device according to Embodiment 2. Note that the configuration of the vehicle 1 and the distance estimating device 31 in Embodiment 2 other than the following is equal to that of the vehicle 1 and the distance measuring device 5 in Embodiment 1.

6. Distance Estimating Device in Embodiment 2

The distance estimating device 31 in Embodiment 2 includes a function of correcting a shift of a vanishing point caused by camera motion, which function being added to the distance estimating device 5 in Embodiment 1. The distance estimating device 31 in Embodiment 2 includes a specific-region optical-flow calculating unit 33, a camera-motion parameter estimator 35, and an image corrector 37 in addition to components of the distance estimating device 5 in Embodiment 1. The specific-region optical-flow calculating unit 33, the camera-motion parameter estimator 35, and the image corrector 37 are each formed by a microprocessor or an FPGA.

The camera 3 captures an image A in the current frame. The image A is stored in the image storage 11, and is transmitted to the specific-region optical-flow calculating unit 33 and a matching unit 23'. The image storage 11 transmits an image B stored in the previous frame to the specific-region optical-flow calculating unit 33.

The specific-region optical-flow calculating unit 33 calculates an optical flow from the center of the image A by block matching in accordance with the received image A in the current frame and the image B in the previous frame. Specifically, SAD in the formula (9) yields calculation of the optical flow $(\Delta u_0, \Delta v_0)$ at the point $(u, v)=(0, 0)$. The optical flow at the central point is calculated by sub-pixel unit of the tenth place. The calculated specific-region optical flow $(\Delta u_0, \Delta v_0)$ is outputted to the camera-motion parameter estimator 35.

The camera-motion parameter estimator 35 estimates camera motion parameters $\omega x$ and $\omega y$ from the formulae (13) and (14) in accordance with the received specific-region optical flow $(\Delta u_0, \Delta v_0)$. The estimated camera motion parameters $\omega x$ and $\omega y$ are outputted to the image corrector 37.

The image corrector 37 corrects the image B in the previous frame with the received camera motion parameters $\omega x$ and $\omega y$ so as for a vanishing point to be located at the image center upon calculation of the optical flow, thereby generating a corrected image B'. The correcting method is performed by calculating the formulae (15) and (16). The corrected image B' is outputted to an image scale-up unit 21'.

The image scale-up unit 21' generates corrected scale-up images $B'_a$, $B'_b$, ..., and $B'_n$ by scaling up the corrected image B' in turn in the same manner as in Embodiment 1. The corrected image B' and the corrected scale-up images $B'_a$, $B'_b$, ..., and $B'_n$ are outputted to the matching unit 23'.

The matching unit 23' performs block matching of the corrected image B' and the corrected scale-up images $B'_u$, $B'_b$, ..., and $B'_n$ to the received image A in the previous current frame in the same manner as in Embodiment 1, thereby calculating an optical flow from the image center. The calculated optical flow from the image center is outputted to the distance estimator 15. The distance estimator 15 performs the same processing as in Embodiment 1, thereby estimating a distance to the object appearing in the captured image.

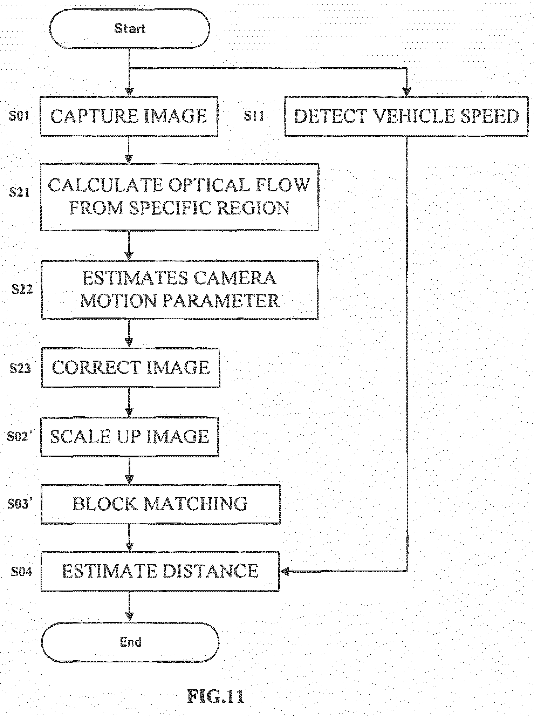

The following describes estimating the distance in Embodiment 2 with reference to Figure 11. Figure 11 is a flow chart illustrating a procedure of estimating the distance according to Embodiment 2.

7. Distance Estimating Method in Embodiment 2

Beside the distance estimating method in Embodiment 1, a distance estimating method in Embodiment 2 includes estimation of the camera motion parameters, and correction of the image in the previous frame in accordance with the estimated camera motion parameters. That is, an image is captured in the step S01 in the same manner as in Embodiment 1. Thereafter, the specific-region optical-flow calculating unit 33 calculates an optical flow from the central point of the image A as a specific region through block matching based on the image A in the current frame and the image B in the previous frame (step S21). The camera-motion parameter estimator 35 estimates camera motion parameters $\omega x$ and $\omega y$ from the calculated optical flow from the specific region (step S22).

The image corrector 37 corrects the image B in the previous frame with the estimated camera motion parameters $\omega x$ and $\omega y$ so as for a vanishing point to be located at the image center, thereby generating a corrected image B' (step S23). The image scale-up unit 21' scales up the corrected image B' in the same manner as in Embodiment 1, thereby generating corrected scale-up images $B'_a$, $B'_b$, ..., and $B'_n$ (step S02'). The matching unit 23' performs block matching of the corrected image B' and the corrected scale-up images $B'_a$, $B'_b$, ..., and $B'_n$ to the image A in the current frame in the same manner as in Embodiment 1, thereby calculating an optical flow from the vanishing point at the image center (step S03'). The same processing as in Embodiment 1 is performed in the steps S11 and S04, whereby a distance to the object appearing in the captured image can be estimated.

As noted above, in Embodiment 2, the optical flow is calculated from the image center as the specific region, whereby the camera motion parameters are estimated. Then, the image in the previous frame is corrected in accordance with the estimated camera motion parameters. This causes the vanishing point to be located at the image center. Accordingly, the distance can be estimated even when the vanishing point is not located at the image center due to travelling of the vehicle depending on track conditions.

That is, the distance can be estimated even when the camera 3 moves in the yaw and pitch directions due to movement of the vehicle 1. This yields estimation of the distance regardless of the track conditions. In addition, this is not limited to a motionless object. For instance, this yields stable estimation of the distance for a motion object such as a forward running vehicle or a person.

Embodiment 3

In Embodiment 2, the specific region is located at the image center. In contrast to this, Embodiment 3 has a characteristic that a lower end side of an image is used as the specific region. The other features are common to those of Embodiment 2.

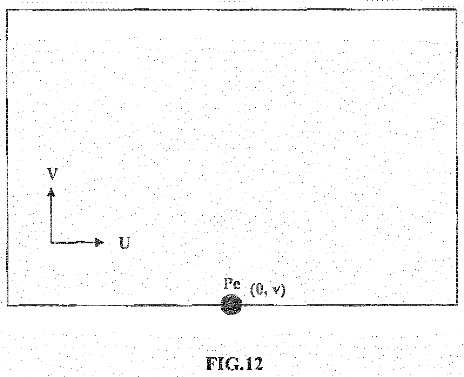

The following describes a midpoint of the lower end of the image used for the specific region. As illustrated in Figure 12, the center point Pe on the lower end of the image has a coordinate (u, v)=(0, v). Accordingly, the formulae (11) and (12) are transformed into the following formulae, respectively:

Formula 17

$$\Delta u = -\omega_y f \quad \text{...(17)}$$

Formula 18

$$\Delta v = +\omega_x f + \frac{t_z}{z} v + \frac{\omega_x}{f} v^2 \quad \text{...(18)}$$

Here, the center point Pe on the image lower end is forward of and below the central point of the vehicle 1 in a width direction. Consequently, since the center point Pe on the image lower end is almost on the road, a distance z in the formula (18) is often known. Moreover, assuming that a vehicle speed tz in the formula (18) is inputted from the vehicle speed sensor 9 of the vehicle 1 provided with the camera 3, a pitch component ωx and a yaw component ωy of the camera motion parameters can be estimated from the formulae (17) and (18).

In Embodiment 2, the specific-region optical-flow calculating unit 33 of the distance estimating device 31 adopts the specific region as the image center. In contrast to this, in Embodiment 3, the distance estimating device calculates an optical flow at the specific region for the midpoint on the image lower end. Moreover, the camera-motion parameter estimator in Embodiment 3 estimates a pitch component ωx and a yaw component ωy of the camera motion parameters. As noted above, in Embodiment 3, the optical flow is calculated at the midpoint on the image lower end for the specific region to estimate the camera motion parameters. In addition, an image in the previous frame is corrected in accordance with the estimated camera motion parameters. This causes the vanishing point to be located at the image center. Accordingly, the distance can be estimated even when the vanishing point is not located at the image center due to travelling of the vehicle 1 depending on the track conditions.

Embodiment 4

The following describes a distance estimating method and a distance estimating device with much enhanced estimating accuracy for the camera motion parameters. Embodiment 4 has a characteristic to estimate a camera motion parameter with two approaches, and enhance estimating accuracy for the camera motion parameter in accordance with the estimated results.

In Embodiment 2 mentioned above, the camera motion parameter is estimated from the optical flow at the specific region in the captured image. In contrast to this, in the present embodiment, a sensor is provided for detecting a camera motion parameter, and the camera motion parameter is also estimated from the detection value. Examples of the sensor detecting the camera motion parameter include a gyro sensor and an acceleration sensor. These sensors preferably perform detection in at least X- and Y-axis directions. These sensors may be provided in the vehicle 1, or may be provided in the camera 3.

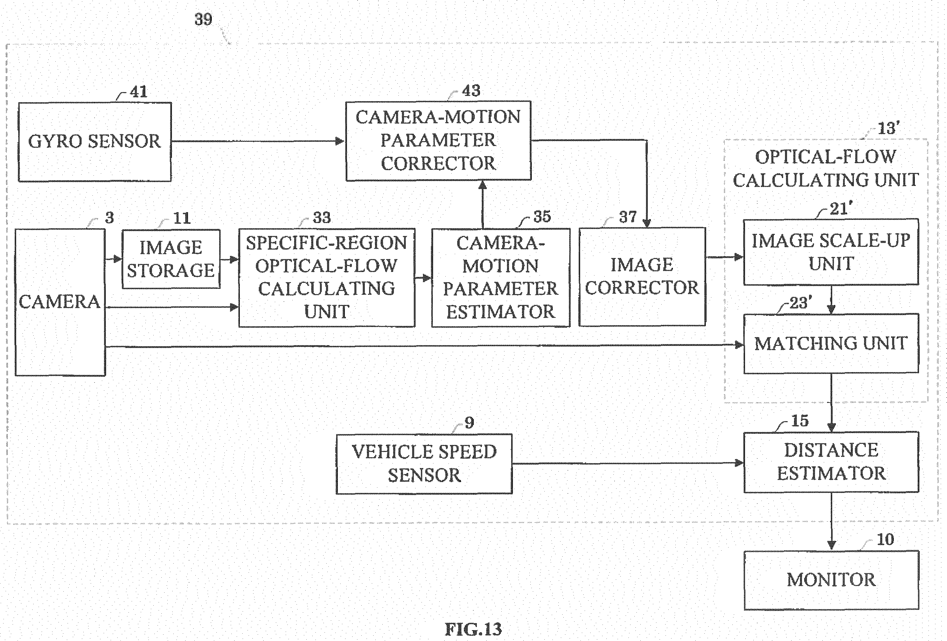

Now description will be made with reference to Figure 13.

Figure 13 is a block diagram of a distance estimating device in Embodiment 4. A distance estimating device 39 in Embodiment 4 further includes a gyro sensor 41 and a camera-motion parameter corrector 43 in the distance estimating device 31 of Embodiment 2.

The gyro sensor 41 provided in the vehicle 1 (see Figure 6) detects rotation moving amounts $\omega x_2$ and $\omega y_2$ of the vehicle 1 in the X- and Y-axis directions, respectively. Here, it is assumed that the rotational moving amount of the vehicle 1 is equal to a rotational moving amount of the camera 3. When the rotational moving amount of the vehicle 1 is different from the rotational moving amount of the camera 3, a detection value of the gyro sensor 41 is corrected, whereby the rotational moving amount of the camera 3 is detected. In addition, the gyro sensor 41 may be directly attached to the camera 3. Alternatively, instead of the gyro sensor 41, the acceleration sensor may be attached.

The camera-motion parameter corrector 43 integrates the camera motion parameters $\omega x$ and $\omega y$ estimated from the optical flow from the specific region with the method of Embodiment 2 and the camera motion parameters $\omega x_2$ and $\omega y_2$ detected with the gyro sensor 41, thereby obtaining corrected camera motion parameters. This yields estimation of the camera motion parameters with high accuracy.

Here, the integration may simply correspond to calculation of an average value of the camera motion parameters $\omega x$ and $\omega y$ estimated from the optical flows in the specific region and the camera motion parameters $\omega x_2$ and $\omega y_2$ detected with the gyro sensor 41. In addition, time-series data on the estimated camera motion values may be used with a Kalman filter. The corrected camera motion parameters are transmitted to the image corrector 37 where the same processing as in Embodiment 2 is performed.

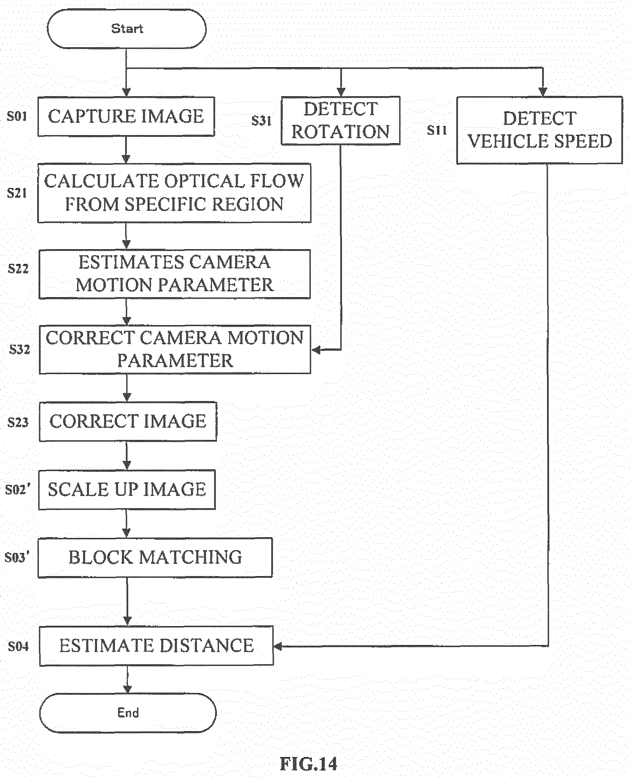

The following describes operation of distance estimation in Embodiment 4 with reference to Figure 14. Figure 14 is a flow chart illustrating a procedure of the distance estimation according to Embodiment 4.

In the distance estimating method according to Embodiment 4, correction of the camera motion parameters is added to the distance estimating method in Embodiment 2. Here, the camera motion parameters are corrected by detecting rotation of the vehicle 1 or the camera 3 with the gyro sensor 41 and integrating the detection value to the estimated camera motion parameters based on the captured image.

At a timing of capturing the image A in the current frame in the step S01, the gyro sensor 41 detects rotation moving amounts $\omega x_2$ and $\omega y_2$. The detected rotation moving amounts $\omega x_2$ and $\omega y_2$ are outputted to the camera motion parameter corrector 43. The same procedures as in Embodiment 2 are performed in the steps S01 to S22.

The camera motion parameter corrector 43 integrates the estimated camera motion parameters $\omega x$ and $\omega y$ to the rotation moving amounts $\omega x_2$ and $\omega y_2$ detected with the gyro sensor 41, thereby correcting the camera motion parameters (step S32). Thereafter, the image is corrected with the corrected camera motion parameters $\omega x'$ and $\omega y'$ in the same manner as the step S23 in Embodiment 2. The subsequent steps S02' to S04 are performed in the same manner as in Embodiment 2.

With the Embodiment 4, using both the camera motion parameters obtained with the sensor for detecting the camera motion parameters and the camera motion parameters obtained by estimating the optical flow from the specific region allows enhanced accuracy of the camera motion parameters. This yields an enhanced accuracy for estimating the distance estimating.

The present invention is not limited to the above embodiments, but may be modified as under.

(1) In the above Embodiment 2, the camera motion parameters are estimated based on the captured image. However, this is not limitative. That is, as in Embodiment 4, the sensor such as the gyro sensor or the acceleration sensor may be used to directly detect the camera motion parameters. The sensor directly detects the camera motion parameters $\omega x$ and $\omega y$, achieving reduction in computing load for image processing.

(2) Instead of directly detecting the camera motion parameters with the gyro sensor or the acceleration sensor as in the above modification (1), the camera motion parameters may be detected from a steering angle obtained with the steering angle sensor 45 of the vehicle 1 (see Figure 6) and the vehicle speed obtained with the vehicle speed sensor 9 of the vehicle 1. Such a method as above also yields detection of the camera motion parameters $\omega x$ and $\omega y$, achieving reduction in load for the image processing. Moreover, as in Embodiment 4, the camera motion parameters are integrated for estimation using the camera motion parameters obtained by estimating the optical flow from the specific region in addition to the steering angle and the vehicle speed.

(3) In the above embodiments, the distance is estimated with the image B in the previous frame as the image in the past frame. Alternatively, when the image B in the previous frame is not stored due to imaging errors, an image in two before the frame or an image in three or more before the frame may be used.

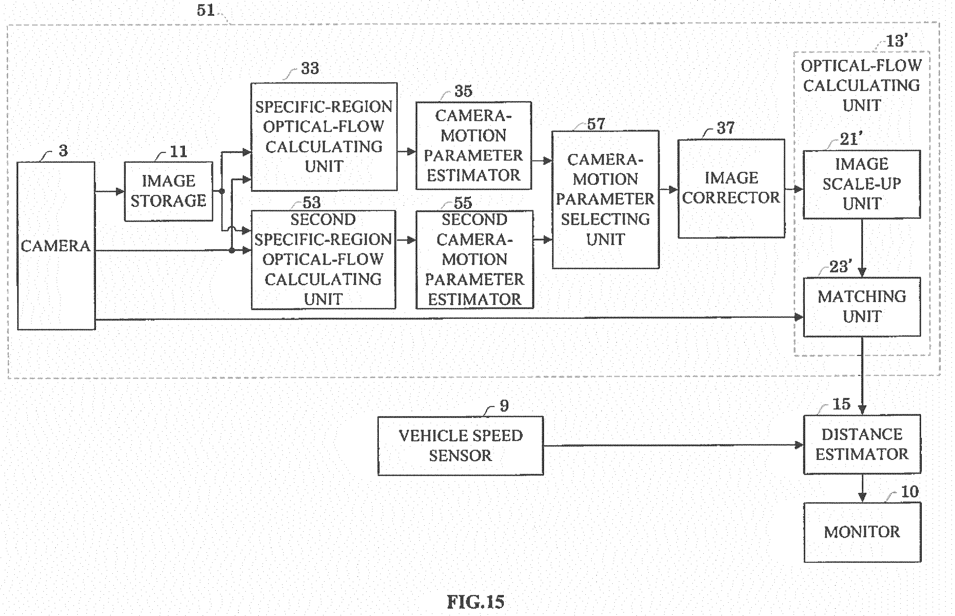

(4) In the above embodiments, the method of calculating the optical flow from the specific region in Embodiment 2 may be used in parallel to the method of calculating the optical flow from the specific region in Embodiment 3. Reference is now made to Figure 15. Figure 15 is a block diagram illustrating a configuration of a distance estimating device 51 in the modification of Embodiment 2. The distance estimating device 51 further includes a second specific-region optical-flow calculating unit 53, a second camera-motion parameter estimator 55, and a camera-motion parameter selecting unit 57 in the distance estimating device 31 of Embodiment 2.

As already described in Embodiment 2, the specific-region optical-flow calculating unit 33 calculates an optical flow from the image center as the specific region. In contrast to this, the second specific-region optical-flow calculating unit calculates an optical flow from a midpoint on the image lower end as the specific region as described in Embodiment 3. The second camera-motion parameter estimator 55 estimates camera motion parameters in accordance with the optical flow calculated in the midpoint on the image lower end as the specific region.

As noted above, estimation of the camera motion parameters for the specific region as the image center is performed independently from estimation of the camera motion parameters for the specific region as the midpoint on the image lower end. This allows the camera-motion parameter selecting unit 57 to select a most suitable camera motion parameter although the motion object enters into either of the regions. Alternatively, the camera motion parameter may be selected with the gyro sensor 41 or the acceleration sensor.

Here, selecting the most suitable camera motion parameter may correspond to selecting a camera motion parameter closest to that calculated at a timing of one frame before when the camera motion parameters obtained from the two independent camera motion parameter estimators diverge largely. Besides, the camera motion parameter closer to the camera motion parameter detected with the gyro sensor 41 may be selected as the most suitable camera motion parameter.

(5) In the above embodiments, the distance estimating device is provided in the vehicle 1. However, this is not limitative. Besides, the distance estimating device may be used for a vision system for robots that travels autonomously, or an assistance system for the visually impaired.

Reference Signs List

| | |
|---|---|
| 1 | vehicle |
| 3 | camera |
| 5, 31, 39, 51 | distance estimating device |
| 9 | vehicle speed sensor |
| 11 | image storage |
| 13, 13' | optical-flow calculating unit |
| 15 | distance estimator |
| 21, 21' | image scale-up unit |
| 23, 23' | matching unit |
| 33 | specific-region optical-flow calculating unit |
| 53 | second specific-region optical-flow calculating unit |
| 35 | camera-motion parameter estimator |
| 55 | second camera-motion parameter estimator |
| 37 | image corrector |
| 41 | gyro sensor |
| 43 | camera-motion parameter corrector |
| 45 | steering angle sensor |

**Claims**

1. A method of estimating a distance from a moving object with monocular motion stereo, the method comprising:

   a capturing step of capturing images;
   an optical flow calculating step of calculating an optical flow from an image center based on the images captured sequentially;
   a speed measuring step of measuring a speed of the moving object; and
   a distance estimating step of estimating a distance to an object appearing in the images in accordance with the optical flow from the image center and the speed.

2. The method of estimating the distance with monocular motion stereo according to claim 1, wherein the optical flow calculating step comprises:

   an image scale-up step of scaling up one of the images captured in a previous frame; and
   a matching step of matching the scale-up image to another one of the images in a current frame, and

   the optical flow is calculated in accordance with an image scale factor of a matched scale-up image.

3. The method of estimating the distance with monocular motion stereo according to claim 1, further comprising:

   a capturing-unit moving-amount estimating step of estimating a moving amount of a capturing unit capturing the images; and

an image correcting step of correcting each of the images in accordance with the moving amount of the capturing unit so as for a vanishing point to be located in the image center, and wherein
the optical flow calculating step comprises calculating the optical flow from the image center based on the captured images and a corrected image.

4. The method of estimating the distance with monocular motion stereo according to claim 3, further comprising:

a specific-region optical-flow calculating step of calculating an optical flow from a specific region based on the captured images, and wherein
the capturing-unit moving-amount estimating step comprises estimating the moving amount of the capturing unit in accordance with the optical flow from the specific region.

5. A distance estimating device with monocular motion stereo that is mounted on a moving object, the device comprising:

a capturing unit capturing images;
an image storage storing the captured images;
an optical flow calculating unit calculating an optical flow from an image center based on the images;
a speed sensor measuring a speed of the moving object; and
a distance estimator estimating a distance to an object appearing in the images in accordance with the optical flow from the image center and the speed.

6. The distance estimating device with monocular motion stereo according to claim 5, wherein
the optical flow calculating unit comprises:

an image scale-up unit scaling up one of the images captured in a previous frame; and
a matching unit matching the scale-up image to another one of the images in a current frame, and wherein

the optical flow is calculated in accordance with an image scale factor of a matched scale-up image.

7. The distance estimating device with monocular motion stereo according to claim 5, further comprising:

a capturing-unit moving-amount estimator estimating a moving amount of the capturing unit; and
an image corrector correcting each of the images in accordance with the moving amount of the capturing unit so as for a vanishing point to be located at the image center, wherein
the optical flow calculating unit calculates the optical flow from the image center based on the captured images and a corrected image.

8. The distance estimating device with monocular motion stereo according to claim 7, further comprising:

a specific-region optical-flow calculating unit calculating an optical flow from a specific region based on the captured images, and wherein
the capturing-unit moving-amount estimator estimates the moving amount of the capturing unit in accordance with the optical flow from the specific region.

9. The distance estimating device with monocular motion stereo according to claim 7, further comprising:

a specific-region optical-flow calculating unit calculating the optical flow from the specific region based on the captured images; and
a sensor detecting movement of the moving object or the capturing unit, and wherein
the capturing-unit moving-amount estimator estimates the moving amount in accordance with a detection value of the sensor and the optical flow from the specific region.

10. The distance estimating device with monocular motion stereo according to claim 7, further comprising:

a sensor detecting movement of the moving object or the capturing unit, and wherein
the capturing-unit moving-amount estimator estimates the moving amount of the capturing unit in accordance with a detection value of the sensor.

11. The distance estimating device with monocular motion stereo according to claim 8 or 9, wherein the specific region is the image center.

12. The distance estimating device with monocular motion stereo according to claim 8 or 9, wherein the specific region is a midpoint on a lower end of each of the images.

13. The distance estimating device with monocular motion stereo according to claim 9 or 10, wherein the sensor is a gyro sensor or an acceleration sensor.

14. The distance estimating device with monocular motion stereo according to claim 9 or 10, wherein the sensor is a steering angle sensor detecting a steering angle of the moving object, and the capturing-unit moving-amount estimator estimates the moving amount of the capturing unit in accordance with the steering angle detected with the steering angle sensor, the speed detected with the speed sensor, and the optical flow from the specific region.

FIG.1

FIG.2

FIG.3

FIG.4

FIG.5

FIG.6

EP 3 009 789 A1

FIG.7

20

IMAGE Bb

IMAGE Ba

IMAGE B

$(u'(1+a),v'(1+a))$

$(u'(1+b),v'(1+b))$

$(u, v)$

$(u, v)$

$(u, v)$

● ● ●

IMAGE A

IMAGE A

IMAGE A

$(u, v)$

$(u, v)$

$(u, v)$

● ● ●

CALCULATE IMAGE SCALE FACTOR WITH MINIMUM SAD

**FIG.8**

Start

S01 CAPTURE IMAGE

S11 DETECT VEHICLE SPEED

S02 SCALE UP IMAGE

S03 BLOCK MATCHING

S04 ESTIMATE DISTANCE

End

**FIG.9**

EP 3 009 789 A1

**FIG.10**

Start

S01 CAPTURE IMAGE    S11 DETECT VEHICLE SPEED

S21 CALCULATE OPTICAL FLOW FROM SPECIFIC REGION

S22 ESTIMATES CAMERA MOTION PARAMETER

S23 CORRECT IMAGE

S02' SCALE UP IMAGE

S03' BLOCK MATCHING

S04 ESTIMATE DISTANCE

End

FIG.11

FIG.12

OPTICAL-FLOW CALCULATING UNIT 13'

IMAGE SCALE-UP UNIT 21'

MATCHING UNIT 23'

DISTANCE ESTIMATOR 15

MONITOR 10

IMAGE CORRECTOR 37

CAMERA-MOTION PARAMETER ESTIMATOR 35

CAMERA-MOTION PARAMETER CORRECTOR 43

SPECIFIC-REGION OPTICAL-FLOW CALCULATING UNIT 33

GYRO SENSOR 41

IMAGE STORAGE 11

CAMERA 3

VEHICLE SPEED SENSOR 9

39

**FIG.13**

**FIG.14**

**FIG.15**

EP 3 009 789 A1

## INTERNATIONAL SEARCH REPORT

International application No.

PCT/JP2014/065152

A. CLASSIFICATION OF SUBJECT MATTER
*G01B11/00*(2006.01)i, *G01C3/06*(2006.01)i

According to International Patent Classification (IPC) or to both national classification and IPC

B. FIELDS SEARCHED

Minimum documentation searched (classification system followed by classification symbols)
G01B11/00, G01C3/06, G06T1/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2011-209070 A  (Daihatsu Motor Co., Ltd.),<br>20 October 2011 (20.10.2011),<br>paragraphs [0014] to [0022]; fig. 1 to 2<br>(Family: none) | 1,5<br>3-4,7-14<br>2,6 |
| Y | JP 2012-10145 A  (JVC Kenwood Corp.),<br>12 January 2012 (12.01.2012),<br>paragraphs [0021] to [0047]; fig. 4 to 13<br>(Family: none) | 3-4,7-14 |
| A | JP 2012-146146 A  (Denso IT Laboratory, Inc.),<br>02 August 2012 (02.08.2012),<br>entire text; all drawings<br>(Family: none) | 1-14 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    05 August, 2014 (05.08.14) | Date of mailing of the international search report<br>    19 August, 2014 (19.08.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/065152

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2003-329411 A  (Matsushita Electric Industrial Co., Ltd.), 19 November 2003 (19.11.2003), entire text; all drawings (Family: none) | 1-14 |
| A | JP 10-255071 A  (Iwane Laboratories, Ltd.), 25 September 1998 (25.09.1998), entire text; all drawings (Family: none) | 1-14 |
| A | US 2007/0154068 A1  (MOBILEYE TECHNOLOGIES, LTD.), 05 July 2007 (05.07.2007), entire text; all drawings & US 2012/0200707 A1    & EP 1806595 A1 & DE 602006006017 D    & AT 427506 T | 1-14 |

Form PCT/ISA/210 (continuation of second sheet) (July 2009)

**EP 3 009 789 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4943034 B